# EUROPEAN PATENT APPLICATION

(11) **EP 4 819 698 A1**
(43) Date of publication of application: **07.10.2026**
(21) Application number: 23959964.0
(22) Date of filing: 01.12.2023
(51) Int. Cl.: H04W 48/20, H04W 76/10

(54) **NETWORK SELECTION METHOD, AND TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: YANG, Haorui, Dongguan, Guangdong 523860 (CN)
(74) Representative: Mewburn Ellis LLP
(86) International application number: PCT/CN2023/135965
(87) International publication number: WO 2025/112058

(57) **Abstract**

The disclosure relates to a method for network selection. The method includes the following. A terminal device selects, according to a first list, at least one of one or more public land mobile networks (PLMNs), one or more access technologies (ATs), or one or more core network (CN) types. In embodiments of the disclosure, by selecting, according to the first list, at least one of the one or more PLMNs, the one or more ATs, or the one or more CN types, the terminal device can select to access multiple PLMNs and/or access a PLMN(s) by using multiple ATs.

## Description

### TECHNICAL FIELD

This disclosure relates to the field of communication, in particular to a method for network selection, a terminal device, and a network device.

### BACKGROUND

Upon powering on or entering an idle state, a terminal device will perform public land mobile network (PLMN) selection. The terminal device can select only one PLMN and access the PLMN by using one access technology (AT). However, in some scenarios, the terminal device needs to select two or more PLMNs, or access a PLMN(s) by using two or more different ATs. In such scenarios, how the terminal device selects multiple PLMNs and/or multiple ATs is a technical problem to be solved.

### SUMMARY

A method for network selection, a terminal device, and a network device are provided in embodiments of the disclosure. As such, multiple public land mobile networks (PLMNs) and/or multiple access technologies (ATs) can be selected.

A method for network selection is provided in embodiments of the disclosure. The method includes the following. A terminal device selects, according to a first list, at least one of one or more PLMNs, one or more ATs, or one or more core network (CN) types.

A method for network selection is provided in embodiments of the disclosure. The method includes the following. A first network device sends a first list to a terminal device, where the first list is used for selecting at least one of one or more PLMNs, one or more ATs, or one or more CN types.

A method for network selection is provided in embodiments of the disclosure. The method includes the following. A second network device sends a first list for a terminal device to a first network device, where the first list is used for selecting at least one of one or more PLMNs, one or more ATs, or one or more CN types.

A terminal device is provided in embodiments of the disclosure. The terminal device includes a first processing unit. The first processing unit is configured to select, according to a first list, at least one of one or more PLMNs, one or more ATs, or one or more CN types.

A first network device is provided in embodiments of the disclosure. The first network device includes a second transceiving unit. The second transceiving unit is configured to send a first list to a terminal device, where the first list is used for selecting at least one of one or more PLMNs, one or more ATs, or one or more CN types.

A second network device is provided in embodiments of the disclosure. The second network device includes a third transceiving unit. The third transceiving unit is configured to send a first list for a terminal device to a first network device, where the first list is used for selecting at least one of one or more PLMNs, one or more ATs, or one or more CN types.

A terminal device is provided in embodiments of the disclosure. The terminal device includes a transceiver, a processor, and a memory. The memory is configured to store a computer program. The transceiver is configured to communicate with other devices. The processor is configured to invoke and execute the computer program stored in the memory, to cause the terminal device to perform the method for network selection.

A network device is provided in embodiments of the disclosure. The network device includes a transceiver, a processor, and a memory. The memory is configured to store a computer program. The transceiver is configured to communicate with other devices. The processor is configured to invoke and execute the computer program stored in the memory, to cause the network device to perform the method for network selection.

A chip is provided in embodiments of the disclosure. The chip is configured to implement the method for network selection.

Specifically, the chip includes a processor. The processor is configured to invoke and execute a computer program stored in a memory, to cause a device equipped with the chip to perform the method for network selection.

A computer-readable storage medium is provided in embodiments of the disclosure. The computer-readable storage medium is configured to store a computer program which, when executed by a device, causes the device to perform the method for network selection.

A computer program product is provided in embodiments of the disclosure. The computer program product includes computer program instructions that cause a computer to perform the method for network selection.

A computer program is provided in embodiments of the disclosure. The computer program which, when executed by a computer, causes the computer to perform the method for network selection.

In embodiments of the disclosure, by selecting, according to the first list, at least one of the one or more PLMNs, the one or more ATs, or the one or more CN types, the terminal device can select to access multiple PLMNs and/or access a PLMN(s) by using multiple ATs.

### BRIEF DESCRIPTION OF THE DRAWINGS

FIG. 1 is a schematic architectural diagram of a 5th-generation (5G) system.
FIG. 2 is a schematic diagram illustrating access to a core network (CN) by a user equipment (UE) by using both a 3rd generation partnership project (3GPP) access technology (AT) and a non-3GPP AT.
FIG. 3 is a schematic flowchart of a method for network selection 300 according to an embodiment of the disclosure.
FIG. 4 is a schematic diagram illustrating an implementation of a terminal device obtaining a first list in a method for network selection according to an embodiment of the disclosure.
FIG. 5 is a schematic flowchart of a method for network selection 500 according to an embodiment of the disclosure.
FIG. 6 is a schematic flowchart of a method for network selection 600 according to an embodiment of the disclosure.
FIG. 7 is a flowchart illustrating an implementation of Embodiment 1 of the disclosure.
FIG. 8 is a flowchart illustrating an implementation of Embodiment 2 of the disclosure.
FIG. 9 is a schematic block diagram of a terminal device 900 according to an embodiment of the disclosure.
FIG. 10 is a schematic block diagram of a terminal device 1000 according to another embodiment of the disclosure.
FIG. 11 is a schematic block diagram of a first network device 1100 according to an embodiment of the disclosure.
FIG. 12 is a schematic block diagram of a second network device 1200 according to an embodiment of the disclosure.
FIG. 13 is a schematic block diagram of a second network device 1300 according to another embodiment of the disclosure.
FIG. 14 is a schematic block diagram of a communication device according to embodiments of the disclosure.
FIG. 15 is a schematic block diagram of a chip according to embodiments of the disclosure.

### DETAILED DESCRIPTION

The following will describe technical solutions of embodiments of the disclosure with reference to the accompanying drawings in embodiments of the disclosure.

The technical solutions of embodiments of the disclosure are applicable to various communication systems, for example, a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (WiFi), a 5th-generation (5G) communication system, or other communication systems, etc.

Generally speaking, a conventional communication system generally supports a limited number (quantity) of connections and therefore is easy to implement. However, with the development of communication technology, a mobile communication system will not only support conventional communication but also support, for example, device-to-device (D2D) communication, machine-to-machine (M2M) communication, machine-type communication (MTC), vehicle-to-vehicle (V2V) communication, or vehicle-to-everything (V2X) communication, etc. Embodiments of the present disclosure can also be applied to these communication systems.

In an implementation, the communication system in embodiments of the disclosure may be applied to a carrier aggregation (CA) scenario, or may be applied to a dual connectivity (DC) scenario, or may be applied to a standalone (SA) scenario.

In an implementation, the communication system in embodiments of the disclosure is applicable to an unlicensed spectrum, and the unlicensed spectrum may be regarded as a shared spectrum. Alternatively, the communication system in embodiments of the disclosure is applicable to a licensed spectrum, and the licensed spectrum may be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, a user device, etc.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, a terminal device in a future evolved public land mobile network (PLMN), etc.

In embodiments of the disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In embodiments of the disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, a wireless terminal device in smart home, etc.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, or may be an evolutional Node B (eNB or eNodeB) in LTE, or a relay station or AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device serves a cell, and the terminal device communicates with the network device on a transmission resource (for example, a frequency-domain resource or a spectrum resource) for the cell. The cell may be a cell corresponding to the network device (for example, a base station). The cell may belong to a macro base station, or may belong to a base station corresponding to a small cell. The small cell may include: a metro cell, a micro cell, a pico cell, a femto cell, and the like. These small cells are characterized by small coverage and low transmission power and are adapted to provide data transmission service with high-rate.

In embodiments of the disclosure, the network device may include an access network (AN) device and a core network (CN) device. That is, the wireless communication system further includes multiple CNs for communicating with the AN device. The AN device may be an evolutional Node B (referred to as eNB or e-NodeB for short), a macro base station, a micro base station (also referred to as "small base station"), a pico base station, an access point (AP), a transmission point (TP), or new generation node B (a gNodeB) in a long-term evolution (LTE) system, a next generation (mobile communication system) next radio (NR) system, a license assisted access long-term evolution (LAA-LTE) system, etc.

It can be understood that, in embodiments of the disclosure, a device with communication functions in a network/system can be referred to as a "communication device". The communication device may include the network device and the terminal device(s) that have communication functions. The network device and the terminal device(s) can be the devices described above and will not be elaborated again herein. The communication device may further include other devices such as a network controller, a mobility management entity, or other network entities in the communication system, and embodiments of the disclosure are not limited in this regard.

It can be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It can be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that there is an association relationship between A and B.

In the elaboration of embodiments of the disclosure, the term "correspondence" may mean that there is a direct or indirect correspondence between the two, may mean that there is an association between the two, may mean a relationship of indicating and indicated or configuring and configured, etc.

To facilitate understanding of the technical solutions of embodiments of the disclosure, the related art of embodiments of the disclosure will be described below. The following related art, as an optional scheme, can be arbitrarily combined with the technical solutions of embodiments of the disclosure, which shall all belong to the protection scope of embodiments of the disclosure.

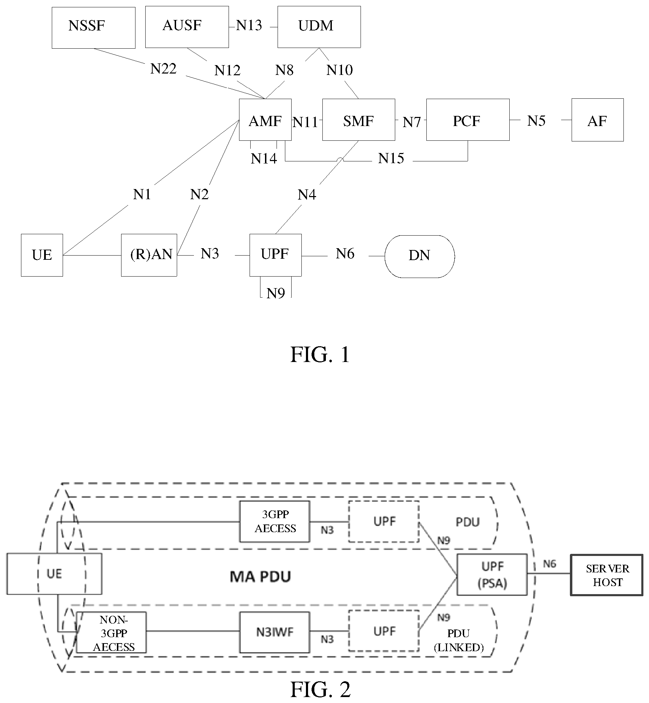

FIG. 1 is a schematic architectural diagram of a 5G system. As illustrated in FIG. 1, a UE accesses a CN via a base station node (i.e., a radio access network (RAN)/AN node). As illustrated in FIG. 1, other nodes, other than the UE, the RAN/AN node, and a data network (DN), are CN nodes. The CN nodes are further classified into a user plane function (UPF) node and a control plane node.

FIG. 2 is a schematic diagram illustrating access to a CN by a UE by using both a 3rd generation partnership project (3GPP) access technology (AT) and a non-3GPP AT. As illustrated in FIG. 2, the UE can access the CN by using both the 3GPP AT and the non-3GPP AT, and transmit a data packet(s) through 3GPP access or non-3GPP access.

Currently, a terminal device will perform PLMN selection upon powering on or entering an idle state. For example, a chip of a mobile phone reads files such as "HPLMN selector with access technology", "user controlled PLMN selector with access technology", "forbidden PLMNs", "equivalent HPLMN", "operator controlled PLMN selector with access technology", etc., from a subscriber identity module (SIM) card. A non-access stratum (NAS) of the chip will trigger an access stratum (AS) to read system information of surrounding cells, and obtain identifiers (IDs) of PLMNs (i.e., PLMN IDs) to which the surrounding cells belong from the system information. The system information may be broadcast directly by a base station, or may be broadcast by a satellite. Then, the AS reports these PLMN IDs to the NAS layer, and the NAS layer selects a final PLMN from the files.

Currently, the terminal device can select only one PLMN and access the PLMN by using one AT. However, in some scenarios, the terminal device needs to select two or more PLMNs, or access a PLMN(s) by using two or more different ATs. The AT includes a 2nd-generation wireless telephone technology (2G) AT, a 3rd-generation wireless telephone technology (3G) AT, evolved universal terrestrial radio access (E-UTRA) (i.e., a 4th generation wireless telephone technology (4G)/LTE technology), a next generation radio access network (NG-RAN) AT (i.e., an NR technology), and a satellite NG-RAN AT. The satellite NG-RAN AT includes HEO satellite access, MEO satellite access, LEO satellite access, etc. For example, the terminal device accesses PLMN #1 by using an NR technology and accesses PLMN #2 by using an LTE technology, or the terminal device accesses PLMN #1 by using an NR technology and accesses PLMN #2 by using a satellite NG-RAN technology, or the terminal device accesses PLMN #1 by using both an NR technology and a satellite NG-RAN technology, etc. In such scenarios, how the terminal device selects multiple PLMNs and/or multiple ATs is a technical problem to be solved.

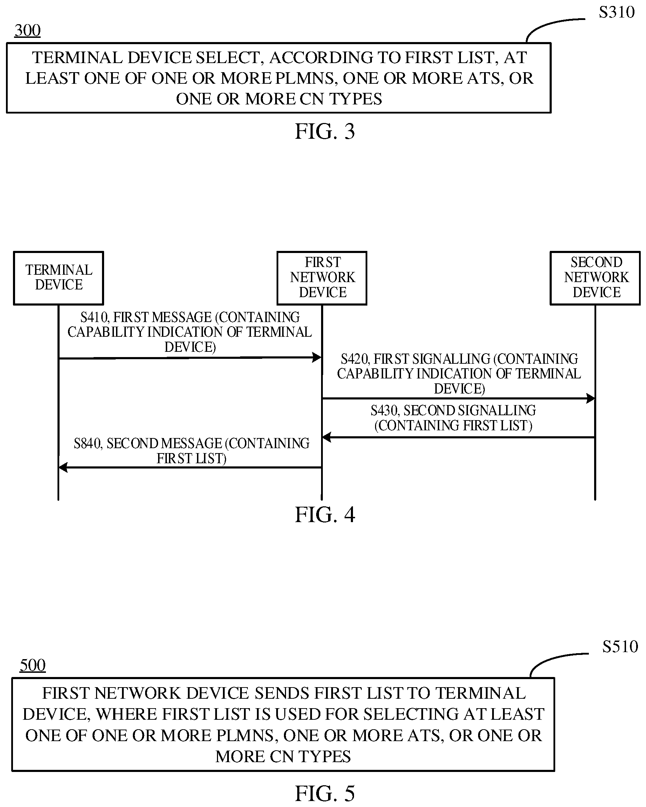

FIG. 3 is a schematic flowchart of a method for network selection 300 according to an embodiment of the disclosure. Optionally, the method is applicable to the system as illustrated in FIG. 1 or FIG. 2, but is not limited thereto. The method includes at least part of the following content.

At S310, a terminal device selects, according to a first list, at least one of one or more PLMNs, one or more ATs, or one or more CN types.

The first list may be configured by a network device for the terminal device, and the terminal device receives the first list sent by the network device. Alternatively, the first list may be stored in an SIM card or a non-volatile memory of the terminal device, and the terminal device reads the first list from the SIM card or the non-volatile memory.

The terminal device selects, according to the first list, at least one of the one or more PLMNs, the one or more ATs, or the one or more CN types, and accesses a selected PLMN(s) by using a selected AT(s) and/or CN type(s), such that the terminal device can access multiple PLMNs and access the PLMNs by using multiple different ATs.

Since the terminal device can select two or more PLMNs by using one first list rather than multiple PLMNs by using multiple lists (i.e., each list is used for selecting one PLMN), the terminal device can select two or more PLMNs with high priorities for access by using the first list. In addition, the terminal device can further select two or more ATs for PLMN access by using the first list.

In an example, after receiving or reading the first list, the terminal device selects two PLMNs and one AT according to the first list, and the terminal device can access the two PLMNs by using the AT.

In another example, after receiving or reading the first list, the terminal device selects two PLMNs and two ATs according to the first list, where each PLMN is associated with one AT, and then the terminal device can access associated PLMNs by using the two ATs, respectively.

In another example, after receiving or reading the first list, the terminal device selects one PLMN and two ATs according to the first list, and the terminal device can access the PLMN by using the two ATs.

Through the manners, the terminal device can achieve selection of multiple PLMNs and/or multiple ATs.

An AT may include at least one of a 2G AT, a 3G AT, E-UTRA, NG-RAN, or satellite NG-RAN. If an evolved packet core (EPC), a 5G core network (5GC), a 6G core network (6GC), etc., cannot be distinguished for the AT, then the first list contains CN type information. As such, the terminal device selects a CN type according to the information in the first list, and accesses one or more PLMNs by using the selected AT(s) and CN type.

The terminal device may be a single-SIM phone or a dual-SIM phone. A dual-SIM phone refers to a phone with two SIM cards installed, while a single-SIM phone refers to a phone with only one SIM card installed.

In some implementations, the first list contains one or more of: one or more PLMNs, one or more ATs, and one or more CN types.

Each of multiple PLMNs can correspond to a different priority, each of multiple ATs can correspond to a different priority, and each of multiple CN types can correspond to a different priority. The terminal device can select one or more PLMNs with high priorities according to the first list, and/or select, according to the first list, at least one of one or more ATs with high priorities or one or more CN types with high priorities. The terminal device can access the one or more selected PLMNs by using the one or more selected ATs and/or CN types.

In some implementations, in the first list, a PLMN is associated with an AT, and/or a PLMN is associated with a CN type.

When a PLMN in the first list is a currently registered PLMN (RPLMN) of the terminal device, the terminal device selects at least one of the one or more ATs or the one or more CN types in the first list to access the currently RPLMN of the terminal device.

In some implementations, the first list contains information of two or more PLMNs arranged in order of priority, where information of each PLMN contains a PLMN ID, and an AT ID and/or a CN type ID that correspond to the PLMN. With such a first list, the terminal device can select two or more PLMNs with the highest priority from the first list, and access each PLMN by using a selected AT and/or a selected CN type that correspond to each selected PLMN, such that the terminal device can access the two or more PLMNs.

In other implementations, the first list contains one PLMN ID and two or more AT IDs and/or CN type IDs arranged in order of priority. With such a first list, the terminal device can select two or more ATs and/or CN types with the highest priority from the first list, and access the PLMN by using the two or more selected ATs and/or CN types, such that the terminal device can access the PLMN by using the two or more ATs.

In other implementations, the first list contains two or more AT IDs and/or CN type IDs arranged in order of priority. With such a first list, the terminal device can select two or more ATs and/or CN types with the highest priority from the first list, and access a currently RPLMN by using the two or more selected ATs and/or CN types, such that the terminal device can access the RPLMN by using the two or more ATs.

In an example, content of the first list is as follows:
1^{st} PLMN (highest priority)
1^{st} PLMN Access Technology Identifier = satellite NG-RAN
1^{st} PLMN Core Network type = 5GC
2^{nd} PLMN
2^{nd} PLMN Access Technology Identifier = satellite E-UTRA
2^{nd} PLMN Core Network type = EPC
3^{rd} PLMN
3^{rd} PLMN Access Technology Identifier = E-UTRA
3^{rd} PLMN Core Network type = EPC

The first list contains three PLMNs with priorities from high to low (i.e., 1^{st} PLMN, 2^{nd} PLMN, and 3^{rd} PLMN), three ATs with priorities from high to low (i.e., satellite NG-RAN, satellite E-UTRA, and E-UTRA), and three CN types with priorities from high to low (i.e., 5GC, EPC, and EPC). An AT corresponding to the 1^{st} PLMN is satellite NG-RAN, and a CN type corresponding to the 1^{st} PLMN is 5GC. An AT corresponding to the 2^{nd} PLMN is satellite E-UTRA, and a CN type corresponding to the 2^{nd} PLMN is EPC. An AT corresponding to the 3^{rd} PLMN is E-UTRA, and a CN type corresponding to the 3^{rd} PLMN is EPC.

According to the first list, if the terminal device needs to stay in a currently RPLMN, e.g., a network requires the terminal device to stay in the currently RPLMN, then after determining a candidate PLMN(s) to which surrounding cells belong, the terminal device can select, from the first list, a PLMN that has high priority and covers the surrounding cells, and access the PLMN by using an AT and a CN type that correspond to the selected PLMN.

Specifically, the terminal device may select one PLMN from the first list, and access the PLMN by using an AT and/or a CN type that correspond to the PLMN. At the same time, the terminal device maintains a previously accessed PLMN.

Alternatively, if the terminal device can access two different PLMNs, then the terminal device reselects the first two PLMNs that have high priorities and cover the surrounding cells from the first list, and accesses each PLMN by using an AT and a CN type that correspond to each PLMN. If the two PLMNs selected by the terminal device do not contain the RPLMN, then the terminal device disconnects a previously accessed PLMN. If the two PLMNs selected by the terminal device contain the RPLMN, then the terminal device stays in the RPLMN.

In another example, content of the first list is as follows:
PLMN #1
1^{st} PLMN Access Technology Identifier = satellite NG-RAN
1^{st} PLMN Core Network type = 5GC
2^{nd} PLMN Access Technology Identifier = satellite E-UTRA
2^{nd} PLMN Core Network type = EPC
3^{rd} PLMN Access Technology Identifier = E-UTRA

The first list contains one PLMN, i.e., PLMN #1, and PLMN #1 is a currently RPLMN of the terminal device. PLMN #1 corresponds to three "AT + CN type" with priorities from high to low, i.e., "satellite NG-RAN + 5GC", "satellite E-UTRA + EPC", and "E-UTRA". The first list implicitly indicates that the network only enables the terminal device to use the same PLMN.

The terminal device can select, according to factors such as an AT(s) supported by the terminal device, two "AT + CN type" combinations with the highest priority from the first list to access PLMN #1 (i.e., the currently RPLMN of the terminal device). If an AT that has the highest priority and is supported by the terminal device is already used by the terminal device to access the network, then the terminal device accesses the PLMN by using another AT. Otherwise, the terminal device accesses the PLMN by using the two ATs.

In another example, the first list does not contain a PLMN, but only contains multiple "AT + CN type" combinations with priorities from high to low. The terminal device can select, according to factors such as an AT(s) supported by the terminal device, two "AT + CN type" combinations with the highest priority from the first list to access the currently RPLMN. If an AT that has the highest priority and is supported by the terminal device is already used by the terminal device to access the network, then the terminal device accesses the PLMN by using another AT. Otherwise, the terminal device accesses the PLMN by using two ATs.

The first list may be configured by the network device for the terminal device. Alternatively, the content of the first list may be stored in an SIM card or a non-volatile memory of the terminal device, and the terminal device reads the first list from the SIM card or the non-volatile memory. Then, the terminal device selects, according to the first list, one or more PLMNs to access and an AT(s) and/or a CN type(s) used for accessing a PLMN(s). The following describes the two cases, respectively.
(I) The first list is configured by the network device for the terminal device

In this manner, the terminal device can send a first message to a first network device, where the first message contains a capability indication of the terminal device. The terminal device receives a second message sent by the first network device, where the second message contains the first list.

FIG. 4 is a schematic diagram illustrating an implementation of a terminal device obtaining a first list in a method for network selection according to an embodiment of the disclosure. The method includes all or part of the following operations.

At S410, the terminal device sends a first message to a first network device, where the first message contains a capability indication of the terminal device. The capability indication of the terminal device can indicate whether the terminal device supports dual 3GPP access. The terminal device can support dual 3GPP access as follows. The terminal device has the capability to access two or more PLMNs, and/or the terminal device has the capability to access a PLMN(s) (including one PLMN or two or more PLMNs) by using two or more ATs. The first network device can include an access and mobility management function (AMF).

At S420, the first network device sends first signalling to a second network device, where the first signalling contains the capability indication of the terminal device.

At S430, the second network device sends second signalling to the first network device, where the second signalling contains the first list.

The second network device can include a unified data management (UDM) or a unified data repository (UDR). When the terminal device supports dual 3GPP access and a network also supports dual 3GPP access, the second network device determines whether to configure the first list for the terminal device (i.e., whether the terminal device is enabled to use dual 3GPP access). The second network device can perform determination by checking subscription information, operator policies, etc., of the terminal device. If the second network device determines that the terminal device is enabled to use dual 3GPP access, i.e., determines to configure the first list for the terminal device, then the second network device sends the second signalling containing the first list to the first network device.

The second signalling may contain the first list and a first indication, where the first indication indicates whether the terminal device is enabled to use dual 3GPP access. For example, the length of the first indication is 1 bit. When a value of the first indication is 1, it indicates that the terminal device is enabled to use dual 3GPP access. When the value of the first indication is 0, it indicates that the terminal device is not enabled to use dual 3GPP access. Alternatively, when the value of the first indication is 1, it indicates that the terminal device is not enabled to use dual 3GPP access. When the value of the first indication is 0, it indicates that the terminal device is enabled to use dual 3GPP access. Alternatively, the second signalling may contain a first indication, where the first indication may contain the first list and an indication indicating whether the terminal device is enabled to use dual 3GPP access.

Whether the terminal device is enabled to use the dual 3GPP access includes one or more of: whether the terminal device is enabled to access two or more PLMNs, and whether the terminal device is enabled to access a PLMN(s) (including one PLMN or two or more PLMNs) by using two or more ATs.

A case where "the terminal device is enabled to use dual 3GPP access" can include the following. The terminal device is enabled to access two or more PLMNs, and/or the terminal device is enabled to access a PLMN(s) by using two or more ATs. A case where "the terminal device is not enabled to use dual 3GPP access" can include the following. The terminal device is not enabled to access two or more PLMNs, and the terminal device is not enabled to access a PLMN(s) by using two or more ATs.

In some implementations, the second message signalling contains the first list but does not contain the first indication, where the first list contained in the second message can implicitly indicate that the terminal device is enabled to use dual 3GPP access.

At S440, the first network device sends the second message to the terminal device, where the second message contains the first list, and the first list is used for selecting at least one of one or more PLMNs, one or more ATs, or one or more CN types.

The second message may contain the first indication indicating whether the terminal device is enabled to use dual 3GPP access. For example, the second message contains the first list and the first indication. Alternatively, the second message may contain a first indication, where the first indication may contain the first list and an indication indicating whether the terminal device is enabled to use dual 3GPP access.

Further, the second message may contain a second indication, where the second indication indicates that the terminal device is to perform network selection upon entering an idle state. For example, when a value of the second indication is 0, it indicates that the terminal device is to perform network selection upon entering the idle state. Alternatively, when the value of the second indication is 1, it indicates that the terminal device is to perform network selection upon entering the idle state.

For example, the second message may contain the first list and the second indication. Alternatively, the second message may contain a second indication, where the second indication may contain the first list and an indication indicating that the terminal device is to perform network selection upon entering the idle state.

The first message may include at least one of a registration request message, a security mode complete message, or a registration complete message.

The second message may include at least one of a registration accept message, a registration reject message, or a downlink (DL) NAS transport message.

For example, if there is no security requirement for the capability indication of the terminal device, then the first message may be a registration request message, and accordingly, the second message may be a registration accept message or a registration reject message. That is, the terminal device sends a registration request message to the first network device, where the registration request message carries the capability indication of the terminal device. After obtaining the first list from the second network device, the first network device sends a registration accept message or a registration reject message to the terminal device, where the registration accept message or the registration reject message carries the first list and the first indication, and may also carry the second indication. Alternatively, if there is no security requirement for the capability indication of the terminal device, then the first message may be a registration complete message, and accordingly, the second message may be a DL NAS transport message. That is, the terminal device sends a registration complete message to the first network device, where the registration request message carries the capability indication of the terminal device. After obtaining the first list from the second network device, the first network device sends a DL NAS transport message to the terminal device, where the DL NAS transport message carries the first list and the first indication, and may also carry the second indication.

For another example, if there is a security requirement for the capability indication of the terminal device, then the first message may be a security mode complete message subsequent to a registration request message. That is, the terminal device sends a security mode complete message to the first network device, where the security mode complete message carries the capability indication of the terminal device. Specifically, the capability indication of the terminal device may be carried in an NAS message container in the security mode complete message, an information element (IE) in the security mode complete message, or a steering of roaming (SOR) container in the security mode complete message. After obtaining the first list for the terminal device from the second network device, the first network device sends a registration accept message or a registration reject message to the terminal device, where the registration accept message or the registration reject message carries the first list and the first indication, and may also carry the second indication.

In this way, in embodiments of the disclosure, a network side can control whether a UE is enabled to register on two PLMNs. If the UE can register on only one PLMN, then the network side configures an order for the UE to select two ATs. If the UE can register on two PLMNs, then the network configures an order for the UE to perform network selection. According to the configuration by the network device, the UE selects to access one or more PLMNs, and accesses a corresponding PLMN(s) (including one or more PLMNs) by using one or more selected ATs.

(II) The first list is stored in the SIM card or the non-volatile memory of the terminal device, and the terminal device reads the first list from the SIM card or the non-volatile memory

In this manner, when the terminal device needs to perform network selection, the terminal device can read the first list from the SIM card or the non-volatile memory.

Further, the terminal device may further read a third indication from the SIM card or the non-volatile memory, where the third indication indicates whether the terminal device is enabled to use dual 3GPP access. Whether the terminal device is enabled to use the dual 3GPP access includes one or more of: whether the terminal device is enabled to access two or more PLMNs, and whether the terminal device is enabled to access a PLMN(s) (including one PLMN or two or more PLMNs) by using two or more ATs.

The first list and the third indication may be contained in the same file or in different files.

In this way, in embodiments of the disclosure, whether the terminal device is enabled to register on two PLMNs can be pre-configured for the terminal device. When the terminal device is pre-configured to register on only one PLMN, an order for selecting two ATs can be configured for the terminal device. When the terminal device is pre-configured to register on two PLMNs, the network configures an order for the terminal device to perform network selection. According to the pre-configuration, the terminal device selects to access one or more PLMNs, and accesses a corresponding PLMN(s) (including one or more PLMNs) by using one or more selected ATs.

For (I), i.e., the first list is configured by the network device for the terminal device, a method for network selection is further provided in embodiments of the disclosure. The first network device configures the first list for the terminal device by using the method for network selection.

FIG. 5 is a schematic flowchart of a method for network selection 500 according to an embodiment of the disclosure. Optionally, the method is applicable to the system as illustrated in FIG. 1 or FIG. 2, but is not limited thereto. The method includes at least part of the following content.

At S510, a first network device sends a first list to a terminal device, where the first list is used for selecting at least one of one or more PLMNs, one or more ATs, or one or more CN types.

The first list contains one or more of one or more PLMNs, one or more ATs, and one or more CN types.

The first network device may include an AMF.

In some implementations, multiple PLMNs in the first list correspond to different priorities, multiple ATs in the first list correspond to different priorities, and multiple CN types in the first list correspond to different priorities.

In some implementations, in the first list, a PLMN is associated with an AT, and/or a PLMN is associated with a CN type.

For examples of the first list, reference may be made to the related content in the method for network selection 300 as illustrated in FIG. 3, which will not be repeated herein.

In some implementations, before the first network device sends the first list to the terminal device, the method further includes the following. The first network device receiving a first message sent by the terminal device, where the first message contains a capability indication of the terminal device.

The first message may include at least one of a registration request message, a security mode complete message, or a registration complete message.

The capability indication of the terminal device can indicate whether the terminal device supports dual 3GPP access.

When the first network device receives the capability indication of the terminal device and the capability indication contains an indication indicating that the terminal device supports dual 3GPP access, the first network device can obtain the first list for the terminal device from a second network device. The second network device may include a UDM or a UDR.

For example, in some implementations, after the first network device receives the first message sent by the terminal device, the method further includes the following. The first network device sends first signalling to the second network device, where the first signalling contains the capability indication of the terminal device. The first network device receiving second signalling sent by the second network device, where the second signalling contains the first list.

When the terminal device supports dual 3GPP access and a network also supports dual 3GPP access, the second network device can check information such as subscription information, operator policies, etc., of the terminal device, and determine, according to the checked result, whether the terminal device is enabled to use dual 3GPP access. If the terminal device is enabled to use dual 3GPP access, then the second network device feeds back the first list for the terminal device to the first network device.

In some implementations, the second signalling contains a first indication, where the first indication indicates whether the terminal device is enabled to use dual 3GPP access. The first indication may contain the first list and an indication indicating whether the terminal device is enabled to use dual 3GPP access.

If the second signalling contains the first list but does not contain the first indication, the first list implicitly indicates that the terminal device is enabled to use dual 3GPP access.

In some implementations, the first network device sends the first list to the terminal device as follows. The first network device sends a second message to the terminal device, where the second message contains the first list and the first indication.

In some implementations, the first network device sends a second message to the terminal device, where the second message contains the first list but does not contain the first indication, and the first list contained in the second message implicitly indicates that the terminal device is enabled to use dual 3GPP access.

The second message may include at least one of a registration accept message, a registration reject message, or a DL NAS transport message.

Further, the second message may contain a second indication, where the second indication indicates that the terminal device is to perform network selection upon entering an idle state.

The first network device in embodiments of the disclosure can obtain the first list for the terminal device from the second network device according to the capability indication of the terminal device, and configure the first list for the terminal device, such that the terminal device can select, according to the first list, one or more PLMNs, one or more ATs, and one or more CN types. As such, the terminal device can register on two PLMNs and access a PLMN(s) by using one or more ATs.

For specific examples of the method 500 executed by the first network device in this embodiment, reference may be made to the related descriptions of the first network device in the method 300, which will not be repeated herein for the sake of brevity.

For (I), i.e., the first list is configured by the network device for the terminal device, a method for network selection is further provided in embodiments of the disclosure. With the method for network selection, the second network device configures the first list for the terminal device, and sends the first list configured for the terminal device to the first network device.

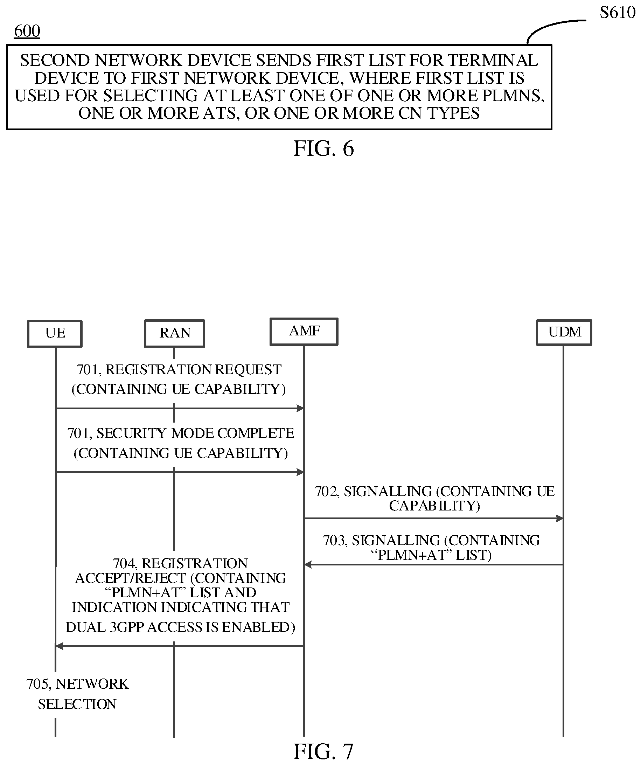

FIG. 6 is a schematic flowchart of a method for network selection 600 according to an embodiment of the disclosure. Optionally, the method is applicable to the system as illustrated in FIG. 1 or FIG. 2, but is not limited thereto. The method includes at least part of the following content.

At S610, a second network device sends a first list for a terminal device to a first network device, where the first list is used for selecting at least one of one or more PLMNs, one or more ATs, or one or more CN types.

The second network device may include a UDM.

The first list contains one or more of one or more PLMNs, one or more ATs, and one or more CN types.

The first network device may include an AMF, and the second network device may include a UDM or a UDR.

In some implementations, multiple PLMNs in the first list correspond to different priorities, multiple ATs in the first list correspond to different priorities, and multiple CN types in the first list correspond to different priorities.

In some implementations, in the first list, a PLMN is associated with an AT, and/or a PLMN is associated with a CN type.

For examples of the first list, reference may be made to the related content in the method for network selection 300 as illustrated in FIG. 3, which will not be repeated herein.

In some implementations, before the second network device sends the first list for the terminal device to the first network device, the method further includes the following. The second network device receives first signalling sent by the first network device, where the first signalling contains a capability indication of the terminal device. The second network device determines the first list for the terminal device based on the first signalling.

Specifically, when the terminal device supports dual 3GPP access and a network also supports dual 3GPP access, the second network device can check information such as subscription information, operator policies, etc., of the terminal device, and determine, according to the checked result, whether the terminal device is enabled to use dual 3GPP access. If the terminal device is enabled to use dual 3GPP access, then the second network device feeds back the first list for the terminal device to the first network device.

The capability indication of the terminal device can indicate whether the terminal device supports dual 3GPP access.

In some implementations, the second network device sends the first list for the terminal device to the first network device as follows. The second network device sends second signalling to the first network device, where the second signalling contains the first list.

Further, the second signalling may contain a first indication, where the first indication indicates whether the terminal device is enabled to use dual 3GPP access.

In some implementations, the second signalling sent by the second network device to the first network device contains the first list but does not contain the first indication, and the first list contained in the second signalling implicitly indicates that the terminal device is enabled to use dual 3GPP access.

The second network device in embodiments of the disclosure can configure the first list for the terminal device according to the capability indication of the terminal device, and send the first list to the terminal device via the first network device, such that the terminal device can select, according to the first list, one or more PLMNs, one or more ATs, and one or more CN types. As such, the terminal device can register on two PLMNs and access a PLMN(s) by using one or more ATs.

For specific examples of the method 600 executed by the second network device in this embodiment, reference may be made to the related descriptions of the second network device in the method 300, which will not be repeated herein for the sake of brevity.

Specific embodiments are described in detail below with reference to the accompanying drawings.

### Embodiment 1

In this embodiment, a network side controls whether a UE is enabled to register on two PLMNs. If the UE can register on only one PLMN, then the network side configures an order for the UE to select two ATs. If the UE can register on two PLMNs, then the network side configures an order for the UE to perform network selection, and each PLMN can also correspond to a corresponding AT.

In this embodiment, a first list configured by a first network device for a terminal device is referred to as a "PLMN+AT" list. In this embodiment, the following is given with an example that the first network device is an AMF and the second network device is a UDM.

FIG. 7 is a flowchart illustrating an implementation of Embodiment 1 of the disclosure. The implementation includes the following.

At 701, a UE sends a registration request message (registration request) to an AMF, where the registration request message contains UE capability and a network slice (representing a service(s) to be used by the UE) requested by the UE, and the UE capability indicates whether the UE supports dual 3GPP access.

Alternatively, if there is a security requirement for the UE capability, then the UE may send the UE capability not using the registration request message, but using a security mode complete message (security mode complete). That is, after the UE sends a registration request message, the UE sends a security mode complete message to the AMF, where the security mode complete message contains UE capability and a network slice (representing a service(s) to be used by the UE) requested by the UE. Specifically, the content sent by the UE may be carried in an NAS message container in the security mode complete message, an IE in the security mode complete message, or an SOR container in the security mode complete message.

At 702, the AMF sends signalling to a UDM, where the signalling contains the UE capability and the network slice requested by the UE.

At 703, when the UE supports dual 3GPP access and a network also supports dual 3GPP access, the UDM determines whether to configure a parameter(s) (such as a "PLMN+AT" list) for dual 3GPP access for the UE. The UDM can perform determination by checking subscription information, operator policies, etc., of the UE. The determination manner can be as follows.

First, the UDM determines whether the UE is enabled to use dual 3GPP access. If the UE is not enabled to use dual 3GPP access, then the UDM does not send a "PLMN+AT" list.

If the UE is enabled to use dual 3GPP access, then the UDM further determines whether dual 3GPP access to two PLMNs is enabled. If only one PLMN can be accessed, then the UDM sends a "PLMN+AT" list to the AMF, where each of PLMNs in the "PLMN+AT" list can be a currently RPLMN, and the "PLMN+AT" list can further contain ATs and CN types that are arranged in order of priority.

An example of the "PLMN+AT" list is as follows:
RPLMN
1^{st} Access Technology Identifier = satellite NG-RAN
1^{st} Core Network type = 5GC
2^{nd} Access Technology Identifier = satellite E-UTRA
2^{nd} Core Network type = EPC
3^{rd} Access Technology Identifier = E-UTRA
3^{rd} Core Network type = EPC

Alternatively, an example of the "PLMN+AT" list is as follows:
1^{st} PLMN = RPLMN
1^{st} Access Technology Identifier = satellite NG-RAN
1^{st} Core Network type = 5GC
2^{nd} PLMN = RPLMN
2^{nd} Access Technology Identifier = satellite E-UTRA
2^{nd} Core Network type = EPC
3^{rd} PLMN = RPLMN
3^{rd} Access Technology Identifier = E-UTRA
3^{rd} Core Network type = EPC

In the above, 1^{st} PLMN, 2^{nd} PLMN, and 3^{rd} PLMN in the "PLMN+AT" list are all RPLMNs.

If two or more PLMNs can be accessed, then the UDM sends a "PLMN+AT" list to the AMF, where PLMNs and ATs can be arranged in order of priority in the "PLMN+AT" list. When EPC, 5GC, and 6GC cannot be distinguished for an AT, the "PLMN+AT" list can further contain CN types arranged in order of priority. An example of the "PLMN+AT" list is as follows:
1^{st} PLMN (highest priority)
1^{st} PLMN Access Technology Identifier = satellite NG-RAN
1^{st} PLMN Core Network type = 5GC
2^{nd} PLMN
2^{nd} PLMN Access Technology Identifier = satellite E-UTRA
2^{nd} PLMN Core Network type = EPC
3^{rd} PLMN
3^{rd} PLMN Access Technology Identifier = E-UTRA
3^{rd} PLMN Core Network type = EPC

Further, the UDM can further send the UE an indication indicating that the UE needs to perform network selection upon entering an idle state.

The UDM can send the AMF a response that contains the "PLMN+AT" list and the indication. The UDM can carry the content to be sent in a container and perform security protection on the container, and the AMF will not read the content of the container.

At 704, the AMF sends a registration accept message or a registration reject message (registration accept/reject) to the UE, where the registration accept message or the registration reject message contains the received "PLMN+AT" list and the received indication, and can further contain an indication authorizing the UE to use dual 3GPP access.

At 705, the UE performs network selection by using the received "PLMN+AT" list. The UE selects a PLMN(s) and an AT(s) according to priorities specified in the "PLMN+AT" list. If the "PLMN+AT" list contains CN types, then the UE selects a PLMN(s), an AT(s), and an AN(s) according to the priorities specified in the "PLMN+AT" list.

For example, the UE first determines whether a PLMN with the first priority in the "PLMN+AT" list is the RPLMN, or the UE determines whether a PLMN with the first priority and a PLMN with the second priority in the "PLMN+AT" list each are the RPLMN.

If yes, the UE does not need to perform network selection, but only needs to connect to the RPLMN by using the second AT in the "PLMN+AT" list, such that the UE can access the RPLMN by using two ATs.

If no, the UE triggers an upper layer to perform PLMN selection. If the UE receives an indication indicating that the UE needs to perform network selection upon entering an idle state, then the UE may enter the idle state immediately or later, to release an AS for subsequent network selection. The UE can select to access two or more PLMNs with high priorities according to the "PLMN+AT" list, and access the PLMNs by using ATs corresponding to the PLMNs.

### Embodiment 2:

In this embodiment, a network side controls whether a UE is enabled to register on two PLMNs. If the UE can register on only one PLMN, then the network side configures an order for the UE to select two ATs. If the UE can register on two PLMNs, then the network side configures an order for the UE to perform network selection.

In this embodiment, a first list configured by a first network device for a terminal device is referred to as a "PLMN+AT" list. In this embodiment, the following is given with an example that the first network device is an AMF and the second network device is a UDM.

This embodiment is similar to Embodiment 1, except that a message(s) for transmitting UE capability and a "PLMN+AT" list in this embodiment is different from that in Embodiment 1.

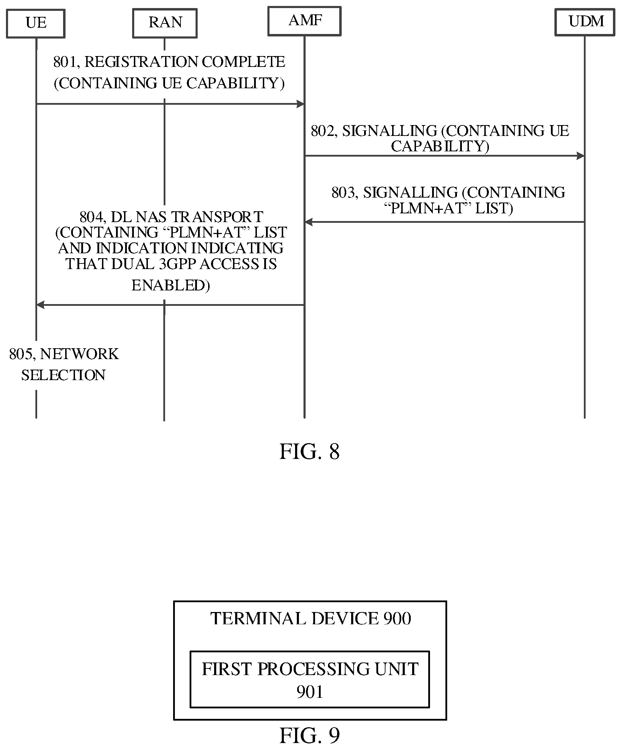

FIG. 8 is a flowchart illustrating an implementation of Embodiment 2 of the disclosure. The implementation includes the following.

At 801, a UE sends a registration complete message (registration complete) to an AMF, where the registration request message contains UE capability and a network slice (representing a service(s) to be used by the UE) requested by the UE, and the UE capability indicates whether the UE supports dual 3GPP access.

At 802, the AMF sends signalling to a UDM, where the signalling contains the UE capability and the network slice requested by the UE.

At 803, when the UE supports dual 3GPP access and a network also supports dual 3GPP access, the UDM determines whether to configure a parameter(s) (such as a "PLMN+AT" list) for dual 3GPP access for the UE. The UDM can perform determination by checking subscription information, operator policies, etc., of the UE. The UDM generates a "PLMN+AT" list for the UE according to a different determined result(s), and sends the generated "PLMN+AT" list and other indications to the AMF. For a specific manner, reference may be made to the operations at 703 in Embodiment 1, which will not be repeated herein.

At 804, the AMF sends a DL NAS transport message (DL NAS transport) to the UE, where the DL NAS transport message contains the received "PLMN+AT" list and the received indications, and can further contain an indication authorizing the UE to use dual 3GPP access.

At 805, the UE performs network selection by using the received "PLMN+AT" list. For a specific manner, reference may be made to the operations at 705 in Embodiment 1, which will not be repeated herein.

### Embodiment 3:

In this embodiment, a first list is pre-stored in an SIM card or a non-volatile memory of a UE. In this embodiment, the first list is referred to as a "PLMN+AT" list.

In an example, file 1 is stored in the SIM card or the non-volatile memory of the UE, where file 1 contains an indication indicating whether the UE is enabled to access one PLMN by using two ATs. Content of file 1 is as illustrated in Table 1 as an example:

**Table 1**

| | | |
|---|---|---|
| Dual-3GPP enabled by operator | Mandatory (M) | 1 byte |

If the UE is enabled to one PLMN by using two ATs, then file 2 is also stored in the SIM card or the non-volatile memory of the UE, where file 2 contains IDs of multiple ATs arranged in order of priority. If CNs cannot be distinguished or identified based on the ATs, then file 2 further contains a CN type. Content of file 2 is as illustrated in Table 2 as an example:

**Table 2**

| | | |
|---|---|---|
| 1^{st} Access Technology Identifier | Mandatory (M) | 2 bytes |
| 2^{nd} Access Technology Identifier | Optional (O) | 2 bytes |
| : | | |
| N^{th} Access Technology Identifier | O | 2 bytes |

File 1 and file 2 may be the same file or different files. That is, the content in file 1 and the content in file 2 may be stored separately in two files, or may be stored together in one file.

When the UE needs to perform network selection, the UE reads a file(s) from the SIM card or the non-volatile memory, determines, according to indication information, that only two 3GPP accesses for one PLMN can be used, and selects, according to ATs detected by an AS, an AT with the highest priority to connect to the PLMN.

In another example, file 3 is stored in the SIM card or the non-volatile memory of the UE, where file 3 contains an indication indicating whether the UE is enabled to access two PLMNs by using two ATs. Content of file 1 is as illustrated in Table 3:

**Table 3**

| | | |
|---|---|---|
| Dual-3GPP enabled by operator | Mandatory (M) | 1 |

If the UE is enabled to access two PLMNs by using two ATs, then file 4 is also stored in the SIM card or the non-volatile memory of the UE, where file 4 contains "PLMN+AT" combinations arranged in order of priority. If CNs cannot be distinguished or identified based on the ATs, then file 4 further contains a CN type. Content of file 4 is as illustrated in Table 4:

**Table 4**

| | | |
|---|---|---|
| 1^{st} PLMN (highest priority) | Mandatory (M) | 3 bytes |
| 1^{st} PLMN Access Technology Identifier | M | 2 bytes |
| : | | |
| N^{th} PLMN (lowest priority) | Optional (O) | 3 bytes |
| N^{th} PLMN Access Technology Identifier | O | 2 bytes |

File 3 and file 4 may be the same file or different files. That is, the content in file 3 and the content in file 4 may be stored separately in two files, or may be stored together in one file.

When the UE needs to perform network selection, the UE reads a file(s) from the SIM card or the non-volatile memory, determines, according to indication information, that two PLMNs can be used for access, and the UE can perform network selection according to the content in the "PLMN+AT" list. An example is as follows.

The UE maintains the currently accessed PLMN. At the same time, the UE selects a PLMN with the highest priority as the second PLMN according to PLMNs and ATs detected by the AS, and connects to the PLMN by using an AT(s) corresponding to the PLMN. Alternatively, if two PLMNs are selected together, e.g., the UE directly selects two PLMNs when powering on, then the UE selects two PLMNs with the highest priority according to PLMNs and ATs detected by the AS, and connects to each PLMN by using an AT(s) corresponding to each PLMN.

For a detailed introduction to the UE performing network selection, reference may be made to the related contents in Embodiment 1 and Embodiment 2, which will not be repeated herein.

A terminal device is further provided in embodiments of the disclosure. FIG. 9 is a schematic block diagram of a terminal device 900 according to an embodiment of the disclosure. The terminal device 900 may include a first processing unit 901. The first processing unit 901 is configured to select, according to a first list, at least one of one or more PLMNs, one or more ATs, or one or more CN types.

In some implementations, the first list contains one or more of: one or more PLMNs, one or more ATs, and one or more CN types.

In some implementations, multiple PLMNs in the first list correspond to different priorities.

In some implementations, multiple ATs in the first list correspond to different priorities.

In some implementations, multiple CN types in the first list correspond to different priorities.

In some implementations, in the first list, a PLMN is associated with an AT, and/or a PLMN is associated with a CN type.

In some implementations, the first processing unit 901 is configured to select one or more PLMNs with high priorities according to the first list, and/or select, according to the first list, at least one of one or more ATs with high priorities or one or more CN types with high priorities.

In some implementations, the first processing unit 901 is configured to, when a PLMN in the first list is a currently RPLMN of the terminal device, select at least one of the one or more ATs or the one or more CN types in the first list to access the currently RPLMN of the terminal device.

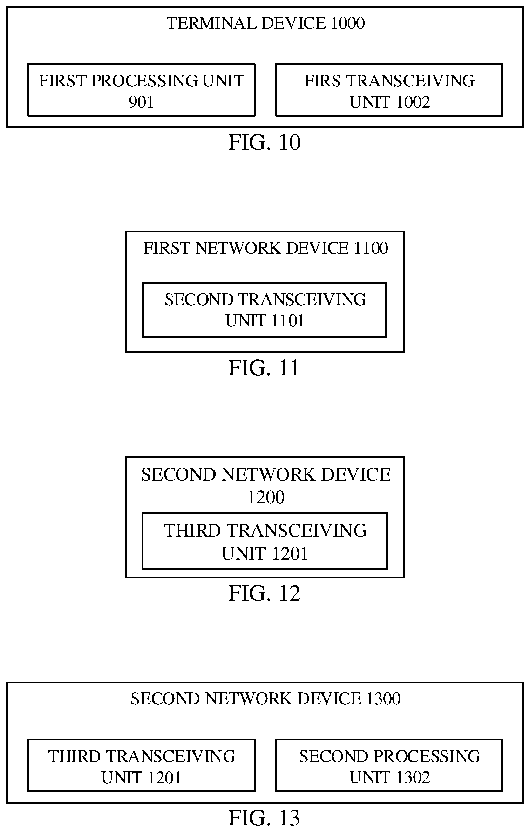

FIG. 10 is a schematic block diagram of a terminal device 1000 according to another embodiment of the disclosure. The device may include one or more features of the device mentioned above. In some implementations, the device further includes a first transceiving unit 1002. The first transceiving unit 1002 is configured to send a first message to a first network device, where the first message contains a capability indication of the terminal device. The first transceiving unit 1002 is further configured to receive a second message sent by the first network device, where the second message contains the first list.

In some implementations, the capability indication of the terminal device indicates whether the terminal device supports dual 3GPP access.

In some implementations, the second message contains a first indication, where the first indication indicates whether the terminal device is enabled to use dual 3GPP access.

In some implementations, the second message contains a second indication, where the second indication indicates that the terminal device is to perform network selection upon entering an idle state.

In some implementations, the first message includes at least one of a registration request message, a security mode complete message, or a registration complete message.

In some implementations, the second message includes at least one of a registration accept message, a registration reject message, or a DL NAS transport message.

In some implementations, the first processing unit 901 is further configured to read the first list from an SIM card or a non-volatile memory.

In some implementations, the first processing unit 901 is further configured to read a third indication from the SIM card or the non-volatile memory, where the third indication indicates whether the terminal device is enabled to use dual 3GPP access.

In some implementations, whether the terminal device is enabled to use the dual 3GPP access includes one or more of: whether the terminal device is enabled to access two or more PLMNs, and whether the terminal device is enabled to access a PLMN by using two or more ATs.

In some implementations, the AT includes one or more of: a 2G AT, a 3G AT, E-UTRA, a NG-RAN AT, and a satellite NG-RAN AT.

In some implementations, the first network device includes an AMF.

The terminal device 900 and the terminal device 1000 in embodiments of the disclosure can implement corresponding functions of the terminal device in the foregoing method embodiments. For the procedure, function, implementation, and advantage corresponding to each module (sub-module, unit, or assembly, etc.) in the terminal device 900 and the terminal device 1000, reference can be made to the corresponding illustrations in the foregoing method embodiments, which will not be described in detail again herein. It can be noted that, the functions of various modules (sub-modules, units, or assemblies, etc.) in the terminal device 900 and the terminal device 1000 described in embodiments of the disclosure may be implemented by different modules (sub-modules, units, or assemblies, etc.), or may be implemented by the same module (sub-module, unit, or assembly, etc.).

A first network device is further provided in embodiments of the disclosure. FIG. 11 is a schematic block diagram of a first network device 1100 according to an embodiment of the disclosure. The first network device 1100 may include a second transceiving unit 1101. The second transceiving unit 1101 is configured to send a first list to a terminal device, where the first list is used for selecting at least one of one or more PLMNs, one or more ATs, or one or more CN types.

In some implementations, the first list contains one or more of: one or more PLMNs, one or more ATs, and one or more CN types.

In some implementations, multiple PLMNs in the first list correspond to different priorities.

In some implementations, multiple ATs in the first list correspond to different priorities.

In some implementations, multiple CN types in the first list correspond to different priorities.

In some implementations, in the first list, a PLMN is associated with an AT, and/or a PLMN is associated with a CN type.

In some implementations, the second transceiving unit 1101 is further configured to receive a first message sent by the terminal device, where the first message contains a capability indication of the terminal device.

In some implementations, the capability indication of the terminal device indicates whether the terminal device supports dual 3GPP access.

In some implementations, the second transceiving unit 1101 is further configured to send first signalling to a second network device, where the first signalling contains the capability indication of the terminal device. The second transceiving unit 1101 is further configured to receive second signalling sent by the second network device, where the second signalling contains the first list.

In some implementations, the second signalling contains a first indication, where the first indication indicates whether the terminal device is enabled to use dual 3GPP access.

In some implementations, the second transceiving unit 1101 is configured to send a second message to the terminal device, where the second message contains the first list and the first indication.

In some implementations, the second message contains a second indication, where the second indication indicates that the terminal device is to perform network selection upon entering an idle state.

In some implementations, the first message includes at least one of a registration request message, a security mode complete message, or a registration complete message.

In some implementations, the second message includes at least one of a registration accept message, a registration reject message, or a DL NAS transport message.

In some implementations, the first network device includes an AMF.

In some implementations, the second network device includes a UDM.

The second network device 1200 and the second network device 1300 in embodiments of the disclosure can implement corresponding functions of the terminal device in the foregoing method embodiments. For the procedure, function, implementation, and advantage corresponding to each module (sub-module, unit, or assembly, etc.) in the second network device 1200 and the second network device 1300, reference can be made to the corresponding illustrations in the foregoing method embodiments, which will not be described in detail again herein. It can be noted that, the functions of various modules (sub-modules, units, or assemblies, etc.) in the second network device 1200 and the second network device 1300 described in embodiments of the disclosure may be implemented by different modules (sub-modules, units, or assemblies, etc.), or may be implemented by the same module (sub-module, unit, or assembly, etc.).

A second network device is further provided in embodiments of the disclosure. FIG. 12 is a schematic block diagram of a second network device 1200 according to an embodiment of the disclosure. The second network device 1200 may include a third transceiving unit 1201. The third transceiving unit 1201 is configured to send a first list for a terminal device to a first network device, where the first list is used for selecting at least one of one or more PLMNs, one or more ATs, or one or more CN types.

In some implementations, the first list contains one or more of: one or more PLMNs, one or more ATs, and one or more CN types.

In some implementations, multiple PLMNs in the first list correspond to different priorities.

In some implementations, multiple ATs in the first list correspond to different priorities.

In some implementations, multiple CN types in the first list correspond to different priorities.

In some implementations, in the first list, a PLMN is associated with an AT, and/or a PLMN is associated with a CN type.

FIG. 13 is a schematic block diagram of a second network device 1300 according to another embodiment of the disclosure. The device may include one or more features of the device. In some implementations, the second network device further includes a second processing unit 1302. The third transceiving unit 1201 is further configured to receive first signalling sent by the first network device, where the first signalling contains the capability indication of the terminal device. The second processing unit 1302 is configured to determine the first list for the terminal device based on the first signalling.

In some implementations, the capability indication of the terminal device indicates whether the terminal device supports dual 3GPP access.

In some implementations, the third transceiving unit 1201 is configured to send second signalling to the first network device, where the second signalling contains the first list.

In some implementations, the second signalling contains a first indication, where the first indication indicates whether the terminal device is enabled to use dual 3GPP access.

In some implementations, the second network device includes a UDM.

In some implementations, the first network device includes an AMF.

The second network device 1200 and the second network device 1300 in embodiments of the disclosure can implement corresponding functions of the terminal device in the foregoing method embodiments. For the procedure, function, implementation, and advantage corresponding to each module (sub-module, unit, or assembly, etc.) in the second network device 1200 and the second network device 1300, reference can be made to the corresponding illustrations in the foregoing method embodiments, which will not be described in detail again herein. It can be noted that, the functions of various modules (sub-modules, units, or assemblies, etc.) in the second network device 1200 and the second network device 1300 described in embodiments of the disclosure may be implemented by different modules (sub-modules, units, or assemblies, etc.), or may be implemented by the same module (sub-module, unit, or assembly, etc.).

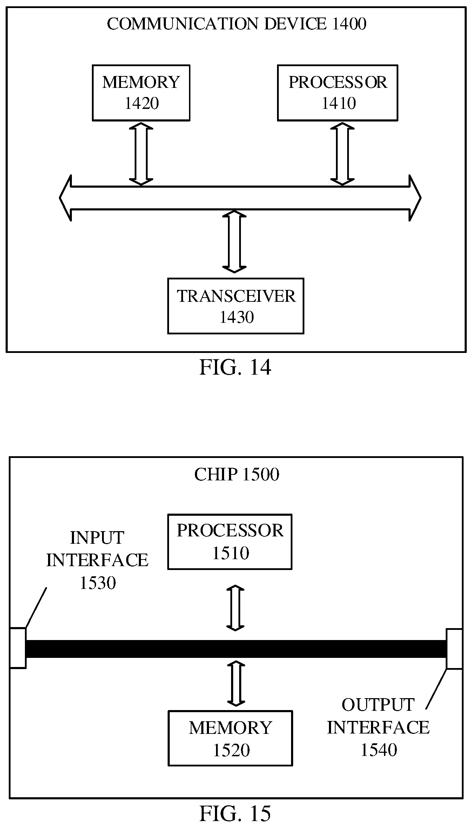

FIG. 14 is a schematic structural diagram of a communication device 1400 according to embodiments of the disclosure. The communication device 1400 includes a processor 1410, where the processor 1410 can invoke and execute a computer program stored in a memory, to cause the communication device 1400 to implement the method in embodiments of the disclosure.

In an implementation, the communication device 1400 may further include a memory 1420. The processor 1410 can invoke and execute a computer program stored in the memory 1420, to cause the communication device 1400 to implement the method in embodiments of the disclosure.

The memory 1420 may be a separate device independent of the processor 1410, or may be integrated into the processor 1410.

In an implementation, the communication device 1400 may further include a transceiver 1430. The processor 1410 may control the transceiver 1430 to communicate with other devices. Specifically, the processor 1410 may control the transceiver 1430 to send information or data to, or receive information or data from, other devices.

The transceiver 1430 may include a transmitter and a receiver. The transceiver 1430 may further include one or more antennas.

In an implementation, the communication device 1400 may be the first network device in embodiments of the disclosure, and the communication device 1400 may implement corresponding operations implemented by the first network device in various methods in embodiments of the disclosure, which will not be repeated herein for the sake of brevity.

In an implementation, the communication device 1400 may be the second network device in embodiments of the disclosure, and the communication device 1400 may implement corresponding operations implemented by the second network device in various methods in embodiments of the disclosure, which will not be repeated herein for the sake of brevity.

In an implementation, the communication device 1400 may be the terminal device in embodiments of the disclosure, and the communication device 1400 may implement corresponding operations implemented by the terminal device in various methods in embodiments of the disclosure, which will not be repeated herein for the sake of brevity.

FIG. 15 is a schematic structural diagram of a chip according to embodiments of the disclosure. The chip 1500 includes a processor 1510, where the processor 1510 can invoke and execute a computer program stored in a memory to implement the method in embodiments of the disclosure.

In an implementation, the chip 1500 may further include a memory 1520. The processor 1510 can invoke and execute a computer program stored in the memory 1520 to implement the method performed by the terminal device, the first network device, and the second network device in embodiments of the disclosure.

The memory 1520 may be a separate device independent of the processor 1510, or may be integrated into the processor 1510.

In an implementation, the chip 1500 may further include an input interface 1530. The processor 1510 may control the input interface 1530 to communicate with other devices or chips. Specifically, the processor 1510 can obtain information or data sent by other devices or chips.

In an implementation, the chip 1500 may further include an output interface 1540. The processor 1510 may control the output interface 1540 to communicate with other devices or chips. Specifically, the processor 1510 may output information or data to other devices or chips.

In an implementation, the chip is applicable to the first network device in embodiments of the disclosure, and the chip may implement the corresponding operations performed by the first network device in various methods in embodiments of the disclosure, which will not be repeated herein for the sake of brevity.

In an implementation, the chip is applicable to the second network device in embodiments of the disclosure, and the chip may implement the corresponding operations performed by the second network device in various methods in embodiments of the disclosure, which will not be repeated herein for the sake of brevity.

In an implementation, the chip is applicable to the terminal device in embodiments of the disclosure, and the chip may implement the corresponding operations performed by the terminal device in various methods in embodiments of the disclosure, which will not be repeated herein for the sake of brevity.

The chips applicable to the first network device, the second network device, and the terminal device may be the same chip or different chips.

It may be understood that, the chip in embodiments of the disclosure may also be referred to as a system-level chip, a system chip, a chip system, or a system-on-chip (SOC).

The processor may be a general-purpose processor, a digital signal processor (DSP), a field programmable gate array (FPGA), an application-specific integrated circuit (ASIC), or other programmable logic devices, discrete gates or transistor logic devices, or discrete hardware components. The general-purpose processor may be a microprocessor, may be any conventional processor, etc.

The memory may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It may be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM). In other words, the memory in embodiments of the disclosure is intended to include, but is not limited to, these and any other suitable types of memory.

All or some of the embodiments can be implemented through software, hardware, firmware, or any other combination thereof. When implemented by software, all or some of the embodiments can be implemented in the form of a computer program product. The computer program product includes one or more computer instructions. When the computer instructions are applied and executed on a computer, all or some of the operations or functions of embodiments of the disclosure are performed. The computer may be a general-purpose computer, a special-purpose computer, a computer network, or other programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired manner or in a wireless manner. Examples of the wired manner may be a coaxial cable, an optical fiber, a digital subscriber line (DSL), etc. The wireless manner may be, for example, infrared, wireless, microwave, etc. The computer-readable storage medium may be any computer-accessible usable medium or a data storage device, such as a server, a data center, etc., that integrates one or more usable media. The usable medium may be a magnetic medium (such as a soft disk, a hard disk, or a magnetic tape), an optical medium (such as a digital video disc (DVD)), a semiconductor medium (such as a solid state disk (SSD)), etc.

It can be understood that, in various embodiments of the disclosure, the magnitude of a sequence number of each of the foregoing processes does not imply an execution order, and the execution order between the processes can be determined according to function and internal logic thereof, which shall not constitute any limitation to the implementation of embodiments of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be described in detail again herein.

The foregoing elaborations are merely embodiments of the disclosure, but are not intended to limit the protection scope of the present disclosure. Any variation or replacement easily thought of by those skilled in the art within the technical scope disclosed in the present disclosure shall belong to the protection scope of the present disclosure. Therefore, the protection scope of the present disclosure shall be subject to the protection scope of the claims.

## Claims

1. A method for network selection, comprising:
selecting, by a terminal device according to a first list, at least one of one or more public land mobile networks (PLMNs), one or more access technologies (ATs), or one or more core network (CN) types.

2. The method of claim 1, wherein the first list contains one or more of:
one or more PLMNs;
one or more ATs; and
one or more CN types.

3. The method of claim 2, wherein a plurality of PLMNs in the first list correspond to different priorities.

4. The method of claim 2, wherein a plurality of ATs in the first list correspond to different priorities.

5. The method of claim 2, wherein a plurality of CN types in the first list correspond to different priorities.

6. The method of any one of claims 2 to 5, wherein in the first list, a PLMN is associated with an AT, and/or a PLMN is associated with a CN type.

7. The method of any one of claims 1 to 6, wherein selecting, by the terminal device according to the first list, at least one of the one or more PLMNs, the one or more ATs, or the one or more CN types comprises:
selecting, by the terminal device according to the first list, one or more PLMNs with high priorities; and/or
selecting, by the terminal device according to the first list, at least one of one or more ATs with high priorities or one or more CN types with high priorities.

8. The method of claim 7, wherein selecting, by the terminal device according to the first list, at least one of the one or more PLMNs, the one or more ATs, or the one or more CN types comprises:
in response to a PLMN in the first list being a currently registered PLMN (RPLMN) of the terminal device, selecting, by the terminal device, at least one of the one or more ATs or the one or more CN types in the first list to access the currently RPLMN of the terminal device.

9. The method of any one of claims 1 to 8, further comprising:
sending, by the terminal device, a first message to a first network device, wherein the first message contains a capability indication of the terminal device; and
receiving, by the terminal device, a second message sent by the first network device, wherein the second message contains the first list.

10. The method of claim 9, wherein the capability indication of the terminal device indicates whether the terminal device supports dual 3rd generation partnership project (3GPP) access.

11. The method of claim 9 or 10, wherein the second message contains a first indication, and the first indication indicates whether the terminal device is enabled to use dual 3GPP access.

12. The method of any one of claims 9 to 11, wherein the second message contains a second indication, and the second indication indicates that the terminal device is to perform network selection upon entering an idle state.

13. The method of any one of claims 9 to 12, wherein the first message comprises at least one of a registration request message, a security mode complete message, or a registration complete message.

14. The method of any one of claims 9 to 12, wherein the second message comprises at least one of a registration accept message, a registration reject message, or a downlink (DL) non-access stratum (NAS) transport message.

15. The method of any one of claims 1 to 8, further comprising:
reading, by the terminal device, the first list from a subscriber identity module (SIM) card or a non-volatile memory.

16. The method of claim 15, further comprising:
reading, by the terminal device, a third indication from the SIM card or the non-volatile memory, wherein the third indication indicates whether the terminal device is enabled to use dual 3GPP access.

17. The method of claim 11 or 16, wherein whether the terminal device is enabled to use the dual 3GPP access comprises one or more of:
whether the terminal device is enabled to access two or more PLMNs; and
whether the terminal device is enabled to access a PLMN by using two or more ATs.

18. The method of any one of claims 1 to 17, wherein the AT comprises one or more of: a 2nd-generation wireless telephone technology (2G) AT, a 3rd-generation wireless telephone technology (3G) AT, evolved universal terrestrial radio access (E-UTRA), a next generation radio access network (NG-RAN) AT, and a satellite NG-RAN AT.

19. The method of any one of claims 9 to 14, wherein the first network device comprises an access and mobility management function (AMF).

20. A method for network selection, comprising:
sending, by a first network device, a first list to a terminal device, wherein the first list is used for selecting at least one of one or more public land mobile networks (PLMNs), one or more access technologies (ATs), or one or more core network (CN) types.

21. The method of claim 20, wherein the first list contains one or more of:
one or more PLMNs;
one or more ATs; and
one or more CN types.

22. The method of claim 21, wherein a plurality of PLMNs in the first list correspond to different priorities.

23. The method of claim 21, wherein a plurality of ATs in the first list correspond to different priorities.

24. The method of claim 21, wherein a plurality of CN types in the first list correspond to different priorities.

25. The method of any one of claims 21 to 24, wherein in the first list, a PLMN is associated with an AT, and/or a PLMN is associated with a CN type.

26. The method of any one of claims 20 to 25, before sending, by the first network device, the first list to the terminal device, further comprising:
receiving, by the first network device, a first message sent by the terminal device, wherein the first message contains a capability indication of the terminal device.

27. The method of claim 26, wherein the capability indication of the terminal device indicates whether the terminal device supports dual 3rd generation partnership project (3GPP) access.

28. The method of claim 26 or 27, after receiving, by the first network device, the first message sent by the terminal device, further comprising:
sending, by the first network device, first signalling to a second network device, wherein the first signalling contains the capability indication of the terminal device; and
receiving, by the first network device, second signalling sent by the second network device, wherein the second signalling contains the first list.

29. The method of claim 28, wherein the second signalling contains a first indication, and the first indication indicates whether the terminal device is enabled to use dual 3GPP access.

30. The method of claim 29, wherein sending, by the first network device, the first list to the terminal device comprises:
sending, by the first network device, a second message to the terminal device, wherein the second message contains the first list and the first indication.

31. The method of claim 30, wherein the second message contains a second indication, and the second indication indicates that the terminal device is to perform network selection upon entering an idle state.

32. The method of any one of claims 26 to 31, wherein the first message comprises at least one of a registration request message, a security mode complete message, or a registration complete message.

33. The method of claim 30 or 31, wherein the second message comprises at least one of a registration accept message, a registration reject message, or a downlink (DL) non-access stratum (NAS) transport message.

34. The method of any one of claims 20 to 33, wherein the first network device comprises an access and mobility management function (AMF).

35. The method of any one of claims 28 to 31, wherein the second network device comprises a unified data management (UDM) or a unified data repository (UDR).

36. A method for network selection, comprising:
sending, by a second network device, a first list for a terminal device to a first network device, wherein the first list is used for selecting at least one of one or more public land mobile networks (PLMNs), one or more access technologies (ATs), or one or more core network (CN) types.

37. The method of claim 36, wherein the first list contains one or more of:
one or more PLMNs;
one or more ATs; and
one or more CN types.

38. The method of claim 37, wherein a plurality of PLMNs in the first list correspond to different priorities.

39. The method of claim 37, wherein a plurality of ATs in the first list correspond to different priorities.

40. The method of claim 37, wherein a plurality of CN types in the first list correspond to different priorities.

41. The method of any one of claims 37 to 40, wherein in the first list, a PLMN is associated with an AT, and/or a PLMN is associated with a CN type.

42. The method of any one of claims 36 to 41, before sending, by the second network device, the first list for the terminal device to the first network device, further comprising:
receiving, by the second network device, first signalling sent by the first network device, wherein the first signalling contains the capability indication of the terminal device; and
determining, by the second network device, the first list for the terminal device based on the first signalling.

43. The method of claim 42, wherein the capability indication of the terminal device indicates whether the terminal device supports dual 3rd generation partnership project (3GPP) access.

44. The method of claim 42 or 43, wherein sending, by the second network device, the first list for the terminal device to the first network device comprises:
sending, by the second network device, second signalling to the first network device, wherein the second signalling contains the first list.

45. The method of claim 44, wherein the second signalling contains a first indication, and the first indication indicates whether the terminal device is enabled to use dual 3GPP access.

46. The method of any one of claims 36 to 45, wherein the second network device comprises a unified data management (UDM) or a unified data repository (UDR).

47. The method of any one of claims 36 to 45, wherein the first network device comprises an access and mobility management function (AMF).

48. A terminal device, comprising:
a first processing unit configured to select, according to a first list, at least one of one or more public land mobile networks (PLMNs), one or more access technologies (ATs), or one or more core network (CN) types.

49. A first network device, comprising:
a second transceiving unit configured to send a first list to a terminal device, wherein the first list is used for selecting at least one of one or more public land mobile networks (PLMNs), one or more access technologies (ATs), or one or more core network (CN) types.

50. A second network device, comprising:
a third transceiving unit configured to send a first list for a terminal device to a first network device, wherein the first list is used for selecting at least one of one or more public land mobile networks (PLMNs), one or more access technologies (ATs), or one or more core network (CN) types.

51. A terminal device, comprising:
a memory configured to store a computer program;
a transceiver configured to communicate with other devices; and
a processor configured to invoke and execute the computer program stored in the memory, to cause the terminal device to perform the method of any one of claims 1 to 19.

52. A first network device, comprising:
a memory configured to store a computer program;
a transceiver configured to communicate with other devices; and
a processor configured to invoke and execute the computer program stored in the memory, to cause the first network device to perform the method of any one of claims 20 to 35.

53. A second network device, comprising:
a memory configured to store a computer program;
a transceiver configured to communicate with other devices; and
a processor configured to invoke and execute the computer program stored in the memory, to cause the second network device to perform the method of any one of claims 36 to 47.

54. A chip, comprising:
a processor configured to invoke and execute a computer program stored in a memory, to cause a device equipped with the chip to perform the method of any one of claims 1 to 47.

55. A computer-readable storage medium configured to store a computer program which, when executed by a device, causes the device to perform the method of any one of claims 1 to 47.

56. A computer program product comprising computer program instructions that are operable with a computer to perform the method of any one of claims 1 to 47.

57. A computer program being operable with a computer to perform the method of any one of claims 1 to 47.
